# EUROPEAN PATENT SPECIFICATION

(11) **EP 2 997 489 B1**
(45) Date of publication and mention of the grant of the patent: **26.09.2018**
(21) Application number: 14798023.9
(22) Date of filing: 19.05.2014
(51) Int. Cl.: G06F 15/173, H04L 29/08, H04W 48/18, H04W 4/00

(54) **METHOD AND DEVICE FOR EFFICIENT MOBILE DATA TRANSMISSION**
VERFAHREN UND VORRICHTUNG ZUR EFFIZIENTEN MOBILDATENÜBERTRAGUNG
PROCÉDÉ ET DISPOSITIF POUR TRANSMISSION DE DONNÉES MOBILE EFFICACE

(30) Priority: 17.05.2013 AU 2013901755
(43) Date of publication of application: 23.03.2016
(73) Proprietor: National ICT Australia Limited, Eveleigh, NSW 2015 (AU)
(72) Inventor: SENEVIRATNE, Aruna, Eveleigh, New South Wales 2015 (AU); MOHAPATRA, Prasant, Eveleigh, New South Wales 2015 (AU); KAAFAR, Dali, Eveleigh, New South Wales 2015 (AU)
(74) Representative: Abel & Imray
(86) International application number: PCT/AU2014/050042
(87) International publication number: WO 2014/183171

(56) References cited:
- EP-A2- 1 039 721
- WO-A1-01/13600
- US-A1- 2005 090 283
- US-A1- 2012 151 044
- US-B1- 6 836 663
- US-B1- 6 836 663

## Description

### Technical Field

This disclosure concerns using storage devices to retrieve data for use on a mobile communication device.

### Background Art

The combination of a large amount of available content and increasing sophistication of mobile communication devices to consume this content causes a growing demand for bandwidth for mobile data transmission. In particular, paying customers expect high definition video streams to start within a couple of seconds and not to stall for refilling the video buffer on the device. Current mobile data networks are often frustrating customers as the user experience does not meet the expectations. It is predicted that this trend will worsen in the near future.

Operators of cellular data networks, such as LTE, are challenged to provide sufficient bandwidth. Especially the 'last hop' between the base station of the cellular network and a smart phone is often a bottleneck that is difficult to widen because of physical limitations on available frequencies. US 6 836 663 B1 (Kotzin) discloses a method of caching where a wireless communications device sends a request to a proximal device to obtain network data if the network data is not available in a local memory on the wireless communications device. If the proximal device has the requested information, then a copy of the data is sent to the wireless communications device.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Disclosure of Invention

In a first aspect there is provided a computer-implemented method for retrieving data for use on a mobile communication device, the method comprising:
determining whether the data is accessible from one or more storage devices over a first wireless data network, the first wireless data network allowing the mobile communication device to connect with the one or more storage devices; and
characterised in that
if it is determined that the data is not accessible from the one or more storage devices,
retrieving the data over a second wireless data network of a type different to the first wireless data network, the second wireless data network allowing the mobile communication device to connect with a data host, and
sending the data to the one or more storage devices over the first wireless data network.

It is an advantage that the data is sent to the storage devices and is therefore available to other mobile devices. As a result, when the same or a different mobile communication device retrieves the same data a second time, the data is still only retrieved once over the second wireless data network. Therefore, data transfer over the second wireless data network is reduced.

It is a further advantage that prediction of future content consumption and user mobility is not required. That is, collecting data in the storage device simply assumes that all data already downloaded by the mobile communication device will likely be accessed by the same or other mobile communication devices on the first wireless data network in future and therefore will be added to the storage device. As a result, in some embodiments, the complexity of machine learning prediction algorithms typically applied by servers in a local area network to collect data in a cache for the entire area network is avoided. Instead the method only relies on the probability that at least one storage device is available.

The first wireless data network may be a relatively fast wireless data network with local data access and the second wireless data network may be a relatively slow wireless data network with global data access.

It is an advantage that the data that is received over the slow global network is sent to the storage devices over the fast local network. As a result, the data becomes local and the storage devices can allow other devices to access the data over the fast local network. This reduces data transfer on the slow global network and results in a better user experience since the data can be downloaded faster over the fast local network.

The first wireless data network may connect the mobile communication device with the one or more storage devices directly, and the second network may be a cellular network.

Since the last hop in a cellular network to the mobile communication device is often the bottleneck for data transmission, it is an advantage that the data is sent over the direct connection to storage devices. As a result, subsequent retrieval of the same data by a different device does not cause any traffic over the last hop of the cellular network. The cellular network can therefore offer higher bandwidth to other services or reduce costs by providing less bandwidth.

The method may further comprise:
detecting the first wireless data network;
identifying the one or more storage devices in the first wireless data network; and
establishing a connection between the mobile communication device and the one or more storage devices over the first wireless data network.

Detecting the first wireless data network may be based on a predefined network identifier.

The method may further comprise establishing a direct connection to the one or more storage devices using the storage device as an access point to the first wireless data network.

The method may further comprise:
sending data stored in memory on the mobile communication device to the one or more storage devices to allow retrieval of the data from the one or more storage devices over the first wireless data network.

The method may further comprise:
determining an availability of one or more storage devices; and
configuring based on the determined availability the mobile communication devices as a storage device.

The method may further comprise:
configuring the mobile communication device as an additional storage device being additional to one or more existing storage devices; and
exchanging data over the first wireless data network between the one or more existing storage devices and the additional storage device. This allows retrieval of the data from the one or more existing storage devices and the additional storage device over the first wireless data network.

It is an advantage that the data is exchanged between the additional and existing storage devices and therefore the storage devices are synchronised. As a result, the method does not rely on a single storage device and when an existing storage device becomes unavailable, the additional storage device can seamlessly take over the provision of data to the mobile communication devices. The storage method works even when the network architecture is transient because of the movement of the mobile communication devices.

The method may further comprise selecting the mobile communication device to be configured as the storage device based on device features of the mobile communication device.

Determining whether the data is accessible from one or more storage devices over a first wireless data network may comprise:
sending a request for the data to the one or more storage devices over the first wireless data network;
receiving a reply from the one or more storage devices; and
determining based on the reply whether the data is accessible from one or more storage devices over a first wireless data network.

Sending the data to the one or more storage devices may be performed during or after the data is used on the mobile communication device.

The method further may further comprise:
predicting data to be requested by the mobile communication device;
retrieving the predicted data over the second wireless data network; and
storing the retrieved data on the one or more storage devices to allow retrieval of the data from the one or more storage devices over the first wireless data network.

The method may further comprise:
if it is determined that the data is accessible from the one or more storage devices over the first wireless data network, retrieving the data from the one or more storage devices for use on the mobile communication device over the first wireless data network.

The second wireless data network may be distinct to the first wireless data network.

In a second aspect there is provided software, that when installed on a mobile communication device causes the mobile communication device to perform the method of the first aspect.

In a third aspect there is provided a mobile communication device for retrieving data for use on the mobile communication device, the mobile communication device comprising:
a first network interface to connect over a first wireless data network the mobile communication device with one or more storage devices;
characterised in that
the device comprises a second network interface to connect over a second wireless data network of a type different to the first wireless data network, the mobile communication device with a data host; and
a processor to determine whether the data is accessible from the one or more storage devices over the first wireless data network, and
if it is determined that the data is not accessible from the one or more storage devices, to retrieve the data over the second wireless data network using the second network interface, and to send the data to the one or more storage devices over the first wireless data network using the first network interface.

Optional features described of any aspect, where appropriate, similarly apply to the other aspects also described here.

### Brief Description of Drawings

An example will be described with reference to:
Fig. 1 illustrates an example application scenario.
Fig. 2 illustrates a mobile communication device, such as a smart phone.
Fig. 3 illustrates a computer-implemented method for retrieving data for use on a mobile communication device.
Fig. 4 illustrates a schematic of the scenario in Fig. 1.

### Best Mode for Carrying Out the Invention

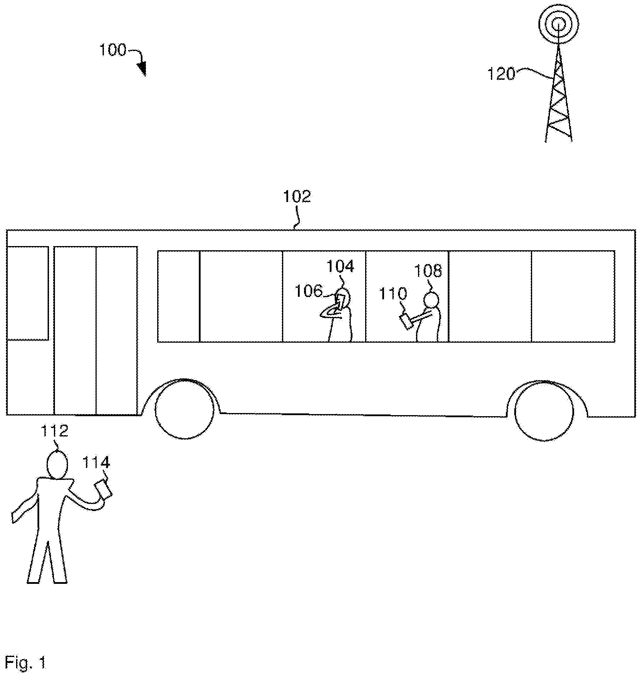

Fig. 1 illustrates an example application scenario 100 comprising a bus 102, a first user 104 on the bus 102 listening to a podcast on a first mobile communication device 106, such as a smart phone, a second user 108 also on the bus 102 watching streaming videos over the Internet on a second smart phone 110 and a third user 112 about to board the bus browsing the Internet on a third smart phone 114.

The application scenario 100 further comprises a base station 120 of a cellular network, such as 3G or LTE. The cellular network allows the users 104, 108 and 112 to transfer data to and from the Internet or other sources. The cellular network may be considered a global network in this context since the access to data is not restricted to data that is locally available. Typically, this global network is relatively slower than local networks.

Users 104, 108 and 112 are using their smart phones 106, 110 and 114 independently but since they are at the same place at the same time, there is a high chance that they will download similar data. For example, many users on their commute to work in the morning check the weather forecast for the day and watch highlights of the most popular sports events that took place overnight. It is not an efficient use of resources that each user downloads the same data over the cellular network via base station 120. Bandwidth between the base station 120 and the users' smart phones 106, 110 and 114 can be reduced by providing a temporary local data store such that the same data is downloaded only once and then subsequently accessed from the local data store multiple times. Such a local data store is referred to as a cache.

Caches are used in personal computers, for example, between the processor and the hard drive to overcome low access times to the data on the hard drive. Since all data is passed through the cache, the cache has full access to the data and can therefore determine an optimal storage strategy.

In scenario 100, however, the base station 120 is the last downstream node that is controlled by the operator of the cellular network and there is no proximal node that has access to the data consumed by all three users 104, 108 and 110. As a result, the use of local caches shared between multiple users is currently limited.

Most modern mobile communication devices not only have an interface to connect to the relatively slow cellular network using base station 12 but also a further interface to connect to another mobile communication device directly over a relatively fast wireless data network with local data access, such as via WiFi or Bluetooth. Reference to slow or fast networks may refer to the time it takes to transfer data as well as the latency time between a request for data and a reply from the network. Operating the cellular network requires significant capital expenditure for the infrastructure, such as base stations, in most cases, the relatively slow cellular network also incurs a high data transfer cost compared to the relatively fast local network, which does not require expensive infrastructure and comparatively attracts lower transfer cost.

Using this further interface a local network can be established that allows the smart phones 104, 108 and 114 to share data. This way one or more of the smart phones 104, 108 and 114 act as a storage device that similarly to a cache device can store data locally. That locally stored data can be accessed by the smart phones 104, 108 and 114 without using bandwidth to the base station 120.

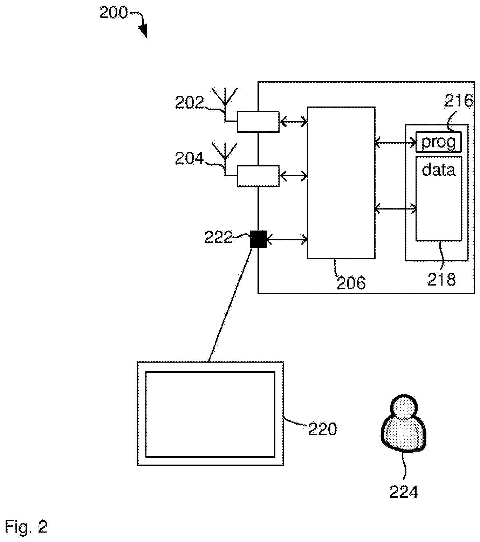

Fig. 2 illustrates a mobile communication device 200, such as a smart phone, The smart phone 200 comprises a first network interface 202 and a second network interface 204 both being connected to a processor 206. Although the first network interface 202 and the second network interface 204 are shown as separate modules, it is to be understood that a shared architecture, such as software defined radio, may also be used to access different networks.

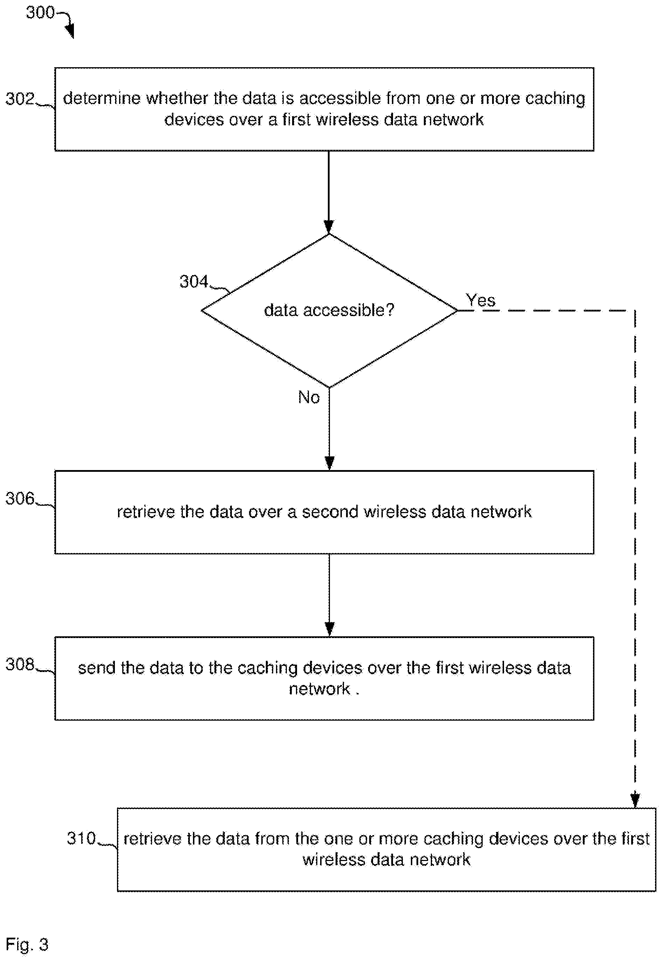

The processor 206 is further connected to program memory 216, data memory 218 and to display 220 via display port 222. For example, a user 224 operates the smart phone 200 to access and view data such as video content. Software, that is an executable program, stored on program memory 216 causes the processor 206 to perform the method in Fig. 3. The software may be in the form typically referred to as an Ap. That is, the processor determines via the first network interface 202 whether the data is accessible from a storage device, retrieves the data via the second network interface 204 if it is not available from the storage device and sends the retrieved data to the storage device via the first network interface 202. In one example, the executable program is a smart phone app that is installed on the smart phone 200 via an application provider, such as the Apple's App Store, Google Play or Amazon App Store.

The processor 206 may receive data, such as video data or status data, from data memory 218 as well as from the network interfaces 202 and 204 and the display port 222, which is connected to a display 220.

It is to be understood that any kind of data port may be used to receive data, such as a network connection, a memory interface, a pin of the chip package of processor 206, or logical ports, such as IP sockets or parameters of functions stored on program memory 216 and executed by processor 206. These parameters may be handled by-value or by-reference in the source code. The processor 206 may receive data through all these interfaces, which includes memory access of volatile memory, such as cache or RAM, or non-volatile memory, such as an optical disk drive, hard disk drive, storage server or cloud storage.

Fig. 3 illustrates a computer-implemented method 300 for retrieving data for use on a mobile communication device 200, such as a smart phone. The data may be used on the mobile communication device 200 in different ways. In one example, the data is a video file and is stored on data store 218 such that the user 224 can watch the video at a later stage. In another example, the data is a video stream and is not stored on the device 200 but is watched by the user 224 as it is being downloaded. Of course, the video may be buffered by the device to account for variations in download speed.

Besides video data other types of data are also applicable, such as HTML websites, electronic books, audio streams/files, smart phone apps and the like.

Method 300 is performed by processor 206 and commences by determining 302 whether the data is accessible from one or more storage devices over a first wireless data network.

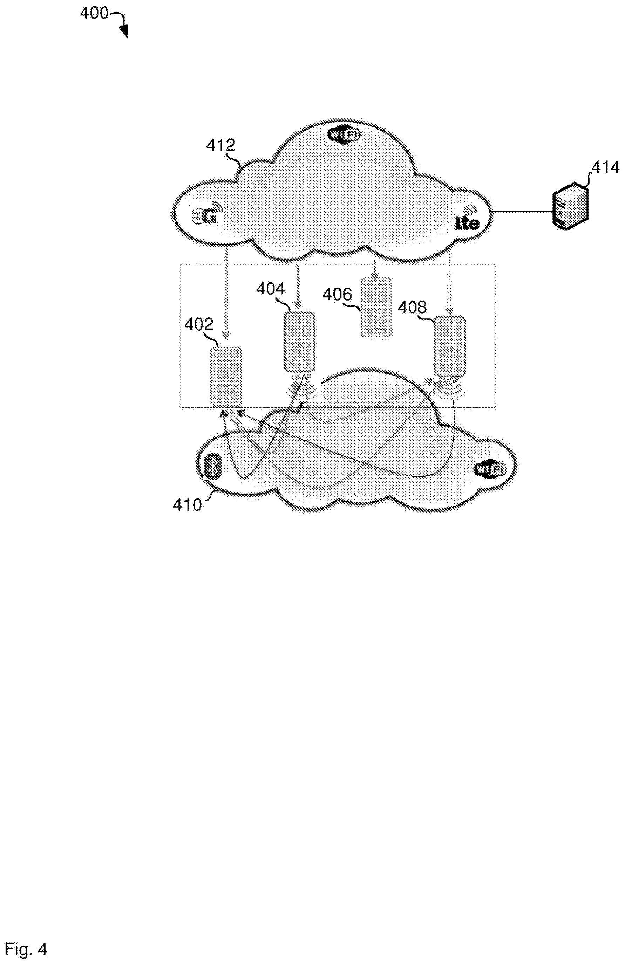

Fig. 4 illustrates a schematic of the scenario in Fig, 1 but with four mobile communication devices 402, 404, 406 and 408. The mobile communication devices 402, 404, 406 and 408 are in a limited geographic area that is referred to here as local, such as a train carriage, a bus, a hotel lobby, train station, etc. It is assumed that the mobile communication devices 402, 404, 406 and 408 are in the area for a period of time, that is, the scenario is quasi stationary. In this example, each of the mobile communication devices 402, 404, 406 and 408 is connected to a first wireless data network 410 and a second wireless data network 412.

Devices 404 and 408 are storage devices, which means that these devices 404 and 408 temporarily store data, such that the stored data can be retrieved from the other devices. In one example, the storage devices 404 and 408 are ordinary smart phones carried by different users and therefore, the storage devices 404 and 408 also provide browser functionality. The main feature requirement of a storage device is that it can communicate on the first wireless network 410 and the memory 218 is sufficiently large to store content to be sent to the other devices of the first wireless network 410 when requested. The term browser is not limited to displaying a website but also comprises other ways of the user downloading and using data, such as a video application or a downloadable music store.

Devices 402 and 406 are browser only devices, which means that these devices do not provide cached data to other devices. The first wireless data network 410 allows the mobile communication devices 402, 404, 406 and 408 to connect with storage devices 404 and 408. It is noted that in cases where storage devices 404 and 408 provide browser functionality, storage device 404 can also connect to storage device 408 and vice versa via first wireless network 410.

In one example, the first wireless network is a Wifi network and the storage devices 404 and 408 are configured as access points of the Wifi network. The browser devices 402 and 406 establish a direct connection to the storage devices 404 and 408 by using the storage devices 404 and 408 as access points.

The mobile communication devices 402, 404, 406 and 408 are further connected to a data host 414 via a second wireless data network 412. The second wireless data network 412 may be a cellular data network, such as 3G, LTE or managed Wifi network, for example, city-wide Wifi. It is noted that the browser functionality in storage devices 404 and 408 is optional and therefore, in some examples, the storage devices 404 and 408 are not connected the second wireless data network 412.

In most cases, the users of the mobile communication devices 402, 404, 406 and 408 have accounts with the operators of the second wireless data network 412 and the second wireless data network 412 allows access to data stored on data hosts any where in the world, that is, global access to data.

The data host 414 is the original source of all data that is available to the mobile communication devices 402, 404, 406 and 408. Of course, in practical applications, there will be more than one data hosts to host the original data.

For simplicity of explanation, it is now assumed that a user of device 402 wishes to access data, such as a video, on device 402. The user selects the video by tapping the screen of the device where a link to the video is presented. The device 402 establishes a direct connection to storage device 404 and sends a request for the video to the storage device 404. The video has not previously been accessed by any of the mobile communication devices 402, 404, 406 and 408 and therefore, the video is not accessible from storage device 404. As a result, storage device 404 sends an access denied message to the originating device 402.

Since device 402 receives the access denied message, it is determined 304 that the video is not accessible from the one or more storage devices, which means the device 402 needs to retrieve the video from elsewhere.

The device 402 retrieves 306 the video from data host 414, such as a YouTube server, over the second wireless data network 412. The second wireless data network 412 is different to the first wireless data network 410 in the sense that the two networks are of a different type. For example, a 3G cellular network is different to a Wifi network and a managed city-wide Wifi network is different to a local self-organised Wifi network. The first and second wireless network are also disjoint in that the devices that are used by device 402 to download the content from the second wireless data network 412 does not include devices that the device 402 uses to check for the existence and download data from the first wireless data network 410.

Similar to a cellular network, a managed city-wide Wifi network with global data access is generally slower and more expensive than a local self-organised Wifi network because the data in the self-organised Wifi network is transferred directly without any additional 'hops' through the infrastructure. Further, the global data access also makes accessing data over the managed city-wide Wifi network slower since the data has to be retrieved from remote data hosts which inevitably leads to additional delay times.

After retrieving the video from the data host 414, the device 402 sends the video to one or both of the storage devices 404 and 408 over the first wireless data network 410. The device 402 may temporarily store the video locally and wait until the entire video is completely downloaded before sending the video to the storage devices 404 and 408. The device 402 may also send the video data as it is received without or with little storage on the device 402, that is, the device 402 directly forwards the video stream to the storage devices 404 and 408. This way, device 402 sends the data to the storage devices 404 and 408 during the time the data is used. In another example, the data may be sent asynchronously after the data is used. The device 402 may decide when to send the data such that the sending of the data is least recognised by the user in the form of reduction of device performance, such as download speed from the storage devices 404 and 408.

The storage devices 404 and 408 store the video and the next time one of the mobile communication devices 402, 404, 406 and 408 sends a request for the same video to the storage devices 404 and 408, the storage devices 404 and 408 reply with an acknowledge message. This means it is determined that the data is accessible from the storage devices 404 and 408 over the first wireless data network and the requesting device retrieves the data from the storage devices 404 and 408 for use on the mobile communication device over the first wireless data network.

In one example, the two storage devices 404 and 408 are synchronised and share the same data. That is, if storage device 404 was the only storage device to receive the data from device 402, storage device 402 would send the data to device 408 automatically. As a result, the device 402 requesting a video can choose one of the storage devices 404 or 408 to request the video, such as by choosing the storage device with the highest signal strength. In other examples, the storage devices 404 and 408 store different data. In that case, the requesting device 402 sends a requesting message to both storage devices 404 and 408 and one of the storage devices 404 or 408 will reply with an acknowledge message if the video is stored on that device.

As mentioned carlier, the setup of the mobile communication devices 402, 404, 406 and 408 is quasi stationary, which also means that from time to time, the topography defined by the mobile communication devices 402, 404, 406 and 408 changes. Such a change may be caused by an additional user joining an existing group, such as in Fig. 1 where user 112 with device 114 enters the bus 102. The reference numerals for devices 106, 110 and 114 in Fig. 1 are equivalent to the reference numerals 402, 404 and 406 in Fig. 4 and can be used interchangeably. In the following description, it is assumed that the device 114 that enters the bus in Fig. 1 is represented by device 406 in Fig. 4.

In this case, the device 406, which has the same configuration as device 200 of Fig. 2, first detects the first wireless network 410 by searching for a Wifi network. Storage devices 404 and 408 advertise their availability via specific SSID broadcast, typically by previously having active the Wifi hotspot mode on the storage devices. In this example, the first wireless network 410 advertises with a predefined network identifier, such as an SSID of "Croudsourced stash WLAN". Predefined may also mean that the network identifier follows certain predefined rules, such as it starts with "Crowdsourced stash" and is followed by an identifier of the respective storage device. Device 406 in active discovery mode searches for these advertisements. Connection to the first wireless network 410 by device 406 is secured using known security

In one example, each storage device 404 and 408 acts as an access point to an independent Wifi network, such that two different Wifi networks with two different SSIDs are available in the example of Fig. 4. In a different example, both storage devices 404 and 408 are nodes of a single Wifi network.

The device 406 establishes a connection to the storage devices 404 and 408 over the local Wifi network 410 and can then determine whether certain data is accessible on storage devices 404 and 408 as explained before.

Typically, most mobile communication devices have an on board cache similar to a browser cache on Personal Computers. When device 406 establishes a connection to the storage devices 404 and 408, device 406 may copy the entire local on board cache onto the storage of the storage devices 404 and 408 such that the data stored on the on board cache in device 406 becomes available to other devices in the area.

The transient nature of the topology may also apply to the storage devices 404 and 408 under the control of a self-organisation procedure. For example, the two users 104 and 108 of Fig. 1 may have just entered the bus 102 and none of the devices 106 and 110 is configured as a storage device. When user 112 enters the bus 102 the user's device 114 determines an availability of any storage devices, such as by searching for valid Wifi SSIDs or by sending request messages to devices 106 and 110. When no available storage device is found, device 114 configures one of the devices 106, 110 or 114 as storage devices. Typically, configuring a storage device requires a verification process that obtains from the storage device the device features, such as type processor, capability and storage capability. Typically, also the user of the storage device must complete an authentication process. Also, the storage device must establish authentication information, such as a password. In one example, a minimum number of storage devices is defined. In that case, when the number of available storage devices is below the minimum number, device 114 configures a further device as storage device.

When an additional storage device is configured, the storage devices exchange data over the first wireless data network to synchronise their respective stored data. Exchanging data comprises sending data to the existing storage devices or receiving data from the existing storage devices or both. This allows retrieval of the data from the one or more existing storage devices and the one or more additional storage devices over the first wireless data network. This way, the storage devices are redundant and when a user leaves the bus 102 this is configured as a storage device, other storage devices can take over without any loss in stored data.

In examples where multiple mobile communication devices are in the bus 102 and none of the devices are configured as a storage device, a decision needs to be made which device is to be configured as a storage device. The devices collect device information on features of the multiple devices, such as available RAM, processor power, workload, battery status. Wifi speed, etc. The device features are converted into a score such that features that increase the potential service level are associated with a higher score. The device with the highest score, or the multiple devices with the highest scores are then selected and configured as storage devices.

Storage devices 404 and 408, after receiving data content from device 402 or from another storage device 404 and 408 during synchronisation, makes a local decision as to whether it is useful or not to update in storage with the new content. This typically depends on the content replacement strategy used such as least recently used or least frequently requested.

It will be appreciated by persons skilled in the art that numerous variations and/or modifications may be made to the specific embodiments without departing from the scope as defined in the claims.

It should be understood that the techniques of the present disclosure might be implemented using a variety of technologies. For example, the methods described herein may be implemented by a series of computer executable instructions residing on a suitable computer readable medium. Suitable computer readable media may include volatile (e.g. RAM) and/or non-volatile (e.g. ROM, disk) memory, carrier waves and transmission media. Exemplary carrier waves may take the form of electrical, electromagnetic or optical signals conveying digital data steams along a local network or a publically accessible network such as the internet.

It should also be understood that, unless specifically stated otherwise as apparent from the following discussion, it is appreciated that throughout the description, discussions utilizing terms such as "estimating" or "processing" or "computing" or "calculating" or "generating" or "retrieving" or "accessing" or "sending", "optimizing" or "determining" or "displaying" or "maximising" or "equalising" or the like, refer to the action and processes of a computer system, or similar electronic computing device, that processes and transforms data represented as physical (electronic) quantities within the computer system's registers and memories into other data similarly represented as physical quantities within the computer system memories or registers or other such information storage, transmission or display devices.

## Claims

1. A computer-implemented method for retrieving data for use on a mobile communication device (402,404,406,408), the method comprising:
determining whether the data is accessible from one or more storage devices over a first wireless data network (410), the first wireless data network allowing the mobile communication device to connect with the one or more storage devices; and
**characterised in that**
if it is determined that the data is not accessible from the one or more storage devices,
retrieving the data over a second wireless data network of a type different to the first wireless data network (412), the second wireless data network allowing the mobile communication device to connect with a data host, and
sending the data to the one or more storage devices over the first wireless data network (410).

2. The method of claim 1, wherein the first wireless data network is a relatively fast wireless data network with local data access and the second wireless data network is a relatively slow wireless data network with global data access.

3. The method of claim 1 or 2, wherein the first wireless data network connects the mobile communication device with the one or more storage devices directly, and the second network is a cellular network.

4. The method of any one of the preceding claims, further comprising:
detecting the first wireless data network;
identifying the one or more storage devices in the first wireless data network; and
establishing a connection between the mobile communication device and the one or more storage devices over the first wireless data network.

5. The method of claim 4, wherein detecting the first wireless data network is based on a predefined network identifier.

6. The method of any one of the preceding claims, further comprising:
establishing a direct connection to the one or more storage devices using the storage device as an access point to the first wireless data network.

7. The method of any one of the preceding claims, further comprising:
sending data stored in memory on the mobile communication device to the one or more storage devices to allow retrieval of the data from the one or more storage devices over the first wireless data network.

8. The method of any one of the preceding claims, further comprising:
determining an availability of the one or more storage devices; and
configuring based on the determined availability the mobile communication devices as a storage device.

9. The method of claim 8, further comprising:
configuring the mobile communication device as an additional storage device being additional to one or more existing storage devices; and
exchanging data over the first wireless data network between the one or more existing storage devices and the additional storage device.

10. The method of claim 8 or 9, further comprising selecting the mobile communication device to be configured as the storage device based on device features of the mobile communication device.

11. The method of any one of the preceding claims, wherein sending the data to the one or more storage devices is performed during or after the data is used on the mobile communication device.

12. The method of any one of the preceding claims, further comprising if it is determined that the data is accessible from the one or more storage devices over the first wireless data network, retrieving the data from the one or more storage devices for use on the mobile communication device over the first wireless data network.

13. The method of any one of the preceding claims, wherein the second wireless data network is distinct to the first wireless data network.

14. Software, that when installed on a computer causes the computer to perform the method of any one or more of claims 1 to 13.

15. A mobile communication device for retrieving data for use on the mobile communication device (200), the mobile communication device comprising:
a first network interface (202) to connect over a first wireless data network the mobile communication device with one or more storage devices;
**characterised in that**
the device comprises a second network interface (204) to connect over a second wireless data network different to the first wireless data network, the mobile communication device with a data host
a processor (206) to determine whether the data is accessible from the one or more storage devices over the first wireless data network, and
if it is determined that the data is not accessible from the one or more storage devices, to retrieve the data over the second wireless data network, and to send the data to the one or more storage devices over the first wireless data network.

## Patentansprüche

1. Computerimplementiertes Verfahren zum Abrufen von Daten zur Verwendung in einer mobilen Kommunikationsvorrichtung (402, 404, 406, 408), wobei das Verfahren umfasst:
Bestimmen, ob die Daten von einer oder mehreren Speichervorrichtungen über ein erstes drahtloses Datennetz (410) zugänglich sind, wobei das erste drahtlose Datennetz der mobilen Vorrichtung erlaubt, sich mit der einen oder den mehreren Speichervorrichtungen zu verbinden; und
**gekennzeichnet durch**
dann, wenn bestimmt wird, dass die Daten von der einen oder den mehreren Speichervorrichtungen nicht zugänglich sind,
Abrufen der Daten über ein zweites drahtloses Datennetz eines von dem ersten drahtlosen Datennetz (412) verschiedenen Typs, wobei das zweite drahtlose Datennetz der mobilen Kommunikationsvorrichtung erlaubt, sich mit einem Daten-Host zu verbinden, und
Senden der Daten an die eine oder die mehreren Speichervorrichtungen über das erste drahtlose Datennetz (410).

2. Verfahren nach Anspruch 1, wobei das erste drahtlose Datennetz ein relativ schnelles drahtloses Datennetz mit einem lokalen Datenzugang ist und das zweite drahtlose Datennetz ein relativ langsames drahtloses Datennetz mit einem globalen Datenzugang ist.

3. Verfahren nach Anspruch 1 oder 2, wobei das erste drahtlose Datennetz die mobile Kommunikationsvorrichtung mit der einen oder den mehreren Speichervorrichtungen direkt verbindet und das zweite Netz ein Mobilfunknetz ist.

4. Verfahren nach einem der vorhergehenden Ansprüche, das ferner umfasst:
Detektieren des ersten drahtlosen Datennetzes;
Identifizieren der einen oder der mehreren Speichervorrichtungen in dem ersten drahtlosen Datennetz; und
Einrichten einer Verbindung zwischen der mobilen Kommunikationsvorrichtung und der einen oder den mehreren Speichervorrichtungen über das erste drahtlose Datennetz.

5. Verfahren nach Anspruch 4, wobei das Detektieren des ersten drahtlosen Datennetzes auf einer vordefinierten Netzkennung beruht.

6. Verfahren nach einem der vorhergehenden Ansprüche, das ferner umfasst:
Einrichten einer direkten Verbindung mit der einen oder den mehreren Speichervorrichtungen unter Verwendung der Speichervorrichtung als einem Zugangspunkt zu dem ersten drahtlosen Datennetz.

7. Verfahren nach einem der vorhergehenden Ansprüche, ferner umfassend:
Senden von in einem Speicher auf der mobilen Kommunikationsvorrichtung gespeicherten Daten an die eine oder die mehreren Speichervorrichtungen, um ein Abrufen der Daten von der einen oder den mehreren Speichervorrichtungen über das erste drahtlose Datennetz zu erlauben.

8. Verfahren nach einem der vorhergehenden Ansprüche, ferner umfassend:
Bestimmen einer Verfügbarkeit der einen oder der mehreren Speichervorrichtungen; und
Konfigurieren der mobilen Kommunikationsvorrichtung als eine Speichervorrichtung anhand der bestimmten Verfügbarkeit.

9. Verfahren nach Anspruch 8, ferner umfassend:
Konfigurieren der mobilen Kommunikationsvorrichtung als eine zusätzliche Speichervorrichtung, die zusätzlich zu der einen oder den mehreren existierenden Speichervorrichtungen vorhanden ist; und
Austauschen von Daten zwischen der einen oder den mehreren existierenden Speichervorrichtungen und der zusätzlichen Speichervorrichtung über das erste drahtlose Datennetz.

10. Verfahren nach Anspruch 8 oder 9, das ferner umfasst, die mobile Kommunikationsvorrichtung, die als die Speichervorrichtung zu konfigurieren ist, anhand von Vorrichtungsmerkmalen der mobilen Kommunikationsvorrichtung auszuwählen.

11. Verfahren nach einem der vorhergehenden Ansprüche, wobei das Senden der Daten an die eine oder die mehreren Speichervorrichtungen während oder nach dem Verwenden der Daten in der mobilen Kommunikationsvorrichtung, ausgeführt wird.

12. Verfahren nach einem der vorhergehenden Ansprüche, das ferner umfasst, dann, wenn bestimmt wird, dass die Daten von der einen oder den mehreren Speichervorrichtungen über das erste drahtlose Datennetz zugänglich sind, die Daten von der einen oder den mehreren Speichervorrichtungen für die Verwendung in der mobilen Kommunikationsvorrichtung über das erste drahtlose Datennetz abzurufen.

13. Verfahren nach einem der vorhergehenden Ansprüche, wobei das zweite drahtlose Datennetz von dem ersten drahtlosen Datennetz verschieden ist.

14. Software, die dann, wenn sie in einem Computer installiert ist, bewirkt, dass der Computer das Verfahren nach einem oder mehreren der Ansprüche 1 bis 13 ausführt.

15. Mobile Kommunikationsvorrichtung zum Abrufen von Daten für die Verwendung in der mobilen Kommunikationsvorrichtung (200), wobei die mobile Kommunikationsvorrichtung umfasst:
eine erste Netzschnittstelle (202), um die mobile Kommunikationsvorrichtung über ein erstes drahtloses Datennetz mit einer oder mehreren Speichervorrichtungen zu verbinden,
**dadurch gekennzeichnet, dass**
die Vorrichtung eine zweite Netzschnittstelle (204) umfasst, um die mobile Kommunikationsvorrichtung über ein zweites drahtloses Datennetz, das von dem ersten drahtlosen Datennetz verschieden ist, mit einem Daten-Host zu verbinden,
einen Prozessor (206), um zu bestimmen, ob die Daten von der einen oder den mehreren Speichervorrichtungen über das erste drahtlose Datennetz zugänglich sind, und
dann, wenn bestimmt wird, dass die Daten von der einen oder den mehreren Speichervorrichtungen nicht zugänglich sind, die Daten über das zweite drahtlose Datennetz abzurufen und die Daten an die eine oder die mehreren Speichervorrichtungen über das erste drahtlose Datennetz zu senden.

## Revendications

1. Procédé mis en oeuvre par ordinateur pour récupérer des données destinées à être utilisées sur un dispositif de communication mobile (402, 404, 406, 408), le procédé comprenant les étapes ci-dessous consistant à :
déterminer si les données sont accessibles à partir d'un ou plusieurs dispositifs de stockage sur un premier réseau de données sans fil (410), le premier réseau de données sans fil permettant au dispositif de communication mobile de se connecter audit un ou auxdits plusieurs dispositifs de stockage ; et
**caractérisé en ce que**
s'il est déterminé que les données ne sont pas accessibles à partir dudit un ou desdits plusieurs dispositifs de stockage :
récupérer les données sur un second réseau de données sans fil d'un type différent du premier réseau de données sans fil (412), le second réseau de données sans fil permettant au dispositif de communication mobile de se connecter à un hôte de données ; et
envoyer les données audit un ou auxdits plusieurs dispositifs de stockage sur le premier réseau de données sans fil (410).

2. Procédé selon la revendication 1, dans lequel le premier réseau de données sans fil est un réseau de données sans fil relativement rapide disposant d'un accès local aux données, et le second réseau de données sans fil est un réseau de données sans fil relativement lent disposant d'un accès global aux données.

3. Procédé selon la revendication 1 ou 2, dans lequel le premier réseau de données sans fil connecte directement le dispositif de communication mobile audit un ou auxdits plusieurs dispositifs de stockage, et dans lequel le second réseau est un réseau cellulaire.

4. Procédé selon l'une quelconque des revendications précédentes, comprenant en outre les étapes ci-dessous consistant à :
détecter le premier réseau de données sans fil ;
identifier ledit un ou lesdits plusieurs dispositifs de stockage dans le premier réseau de données sans fil ; et
établir une connexion entre le dispositif de communication mobile et ledit un ou lesdits plusieurs dispositifs de stockage sur le premier réseau de données sans fil.

5. Procédé selon la revendication 4, dans lequel l'étape de détection du premier réseau de données sans fil est basée sur un identifiant de réseau prédéfini.

6. Procédé selon l'une quelconque des revendications précédentes, comprenant en outre l'étape ci-dessous consistant à :
établir une connexion directe audit un ou auxdits plusieurs dispositifs de stockage, en utilisant le dispositif de stockage en tant que point d'accès au premier réseau de données sans fil.

7. Procédé selon l'une quelconque des revendications précédentes, comprenant en outre l'étape ci-dessous consistant à :
envoyer des données stockées en mémoire sur le dispositif de communication mobile audit un ou auxdits plusieurs dispositifs de stockage, en vue de permettre la récupération des données à partir dudit un ou desdits plusieurs dispositifs de stockage sur le premier réseau de données sans fil.

8. Procédé selon l'une quelconque des revendications précédentes, comprenant en outre les étapes ci-dessous consistant à :
déterminer une disponibilité dudit un ou desdits plusieurs dispositifs de stockage ; et
configurer, sur la base de la disponibilité déterminée, les dispositifs de communication mobile en tant qu'un dispositif de stockage.

9. Procédé selon la revendication 8, comprenant en outre les étapes ci-dessous consistant à :
configurer le dispositif de communication mobile en tant qu'un dispositif de stockage supplémentaire s'ajoutant à un ou plusieurs dispositifs de stockage existants ; et
échanger des données sur le premier réseau de données sans fil entre ledit un ou lesdits plusieurs dispositifs de stockage existants et le dispositif de stockage supplémentaire.

10. Procédé selon la revendication 8 ou 9, comprenant en outre l'étape consistant à sélectionner le dispositif de communication mobile devant être configuré en tant que le dispositif de stockage sur la base de caractéristiques de dispositif du dispositif de communication mobile.

11. Procédé selon l'une quelconque des revendications précédentes, dans lequel l'étape d'envoi des données audit un ou auxdits plusieurs dispositifs de stockage est mise en oeuvre pendant ou après l'utilisation des données sur le dispositif de communication mobile.

12. Procédé selon l'une quelconque des revendications précédentes, comprenant en outre, s'il est déterminé que les données sont accessibles à partir dudit un ou desdits plusieurs dispositifs de stockage sur le premier réseau de données sans fil, l'étape consistant à récupérer les données à partir dudit un ou desdits plusieurs dispositifs de stockage en vue d'une utilisation sur le dispositif de communication mobile sur le premier réseau de données sans fil.

13. Procédé selon l'une quelconque des revendications précédentes, dans lequel le second réseau de données sans fil est distinct du premier réseau de données sans fil.

14. Logiciel, qui, lorsqu'il est installé sur un ordinateur, amène l'ordinateur à mettre en oeuvre le procédé selon l'une quelconque ou plusieurs des revendications 1 à 13.

15. Dispositif de communication mobile destiné à récupérer des données en vue d'une utilisation sur le dispositif de communication mobile (200), le dispositif de communication mobile comprenant :
une première interface de réseau (202) destiné à connecter, sur un premier réseau de données sans fil, le dispositif de communication mobile à un ou plusieurs dispositifs de stockage ;
**caractérisé en ce que** :
le dispositif comprend une seconde interface de réseau (204) destiné à connecter, sur un second réseau de données sans fil distinct du premier réseau de données sans fil, le dispositif de communication mobile à un hôte de données ;
un processeur (206) destiné à déterminer si les données sont accessibles à partir dudit un ou desdits plusieurs dispositifs de stockage sur le premier réseau de données sans fil ; et
s'il est déterminé que les données ne sont pas accessibles à partir dudit un ou desdits plusieurs dispositifs de stockage, à récupérer les données sur le second réseau de données sans fil, et à envoyer les données audit un ou auxdits plusieurs dispositifs de stockage sur le premier réseau de données sans fil.
